(19) Europäisches Patentamt / European Patent Office / Office européen des brevets

(11) **EP 3 342 830 A1**

(12) **EUROPEAN PATENT APPLICATION**

(43) Date of publication:
04.07.2018 Bulletin 2018/27

(21) Application number: 17206601.1

(22) Date of filing: 12.12.2017

(51) Int Cl.:
*C09D 11/102* (2014.01)   *B41M 5/00* (2006.01)
*C09D 11/322* (2014.01)   *C08G 18/32* (2006.01)
*C08G 18/34* (2006.01)   *C08G 18/44* (2006.01)
*C08G 18/48* (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 27.12.2016 JP 2016252825
30.11.2017 JP 2017230513

(71) Applicant: **Canon Kabushiki Kaisha**
**Tokyo 146-8501 (JP)**

(72) Inventor: **YAMASAKI, Kousuke**
**Tokyo, Tokyo 146-8501 (JP)**

(74) Representative: **TBK**
**Bavariaring 4-6**
**80336 München (DE)**

(54) **AQUEOUS INK, INK CARTRIDGE AND INK JET RECORDING METHOD**

(57)   An aqueous ink for ink jet recording contains a pigment and a urethane resin. The urethane resin includes units respectively derived from a polyisocyanate, a polyol and a tri- or more functional polyamine and has a rate (mol%) of the urea bond based on the tri- or more functional polyamine accounting for the total of the urethane bond and the urea bond in the urethane resin of 20 mol% or less and a proportion of the number of urethane bonds to the theoretical molecular weight of the molecular chain constituted of the units respectively derived from the polyisocyanate and the polyol of 40 micromoles or more to 60 micromoles or less.

## FIG. 1

## Description

BACKGROUND OF THE INVENTION

Field of the Invention

The present invention relates to an aqueous ink, an ink cartridge and an ink jet recording method.

Description of the Related Art

In recent years, an ink jet recording method is used even in printing of business sentences including characters and diagrams on a recording medium such as plain paper, and the frequency of such use has been remarkably increasing. In such use, high color development and fastness (resistance to light, ozone gas, water and so on) of images are required. Accordingly, inks (pigment inks) containing pigments as coloring materials are used in many cases.

Images recorded with pigment inks have high color development, compared to these recorded with inks containing dyes as coloring materials, due to a large amount of the coloring materials present on the surface of a recording medium. This is caused by that a pigment has a property of rapidly aggregating due to evaporation of the liquid compounds occurring in the process of applying the ink to a recording medium and occurring after the application, whereas a dye permeates into the inside of a recording medium. However, in pigment inks, since the pigment as a coloring material tends to be present on the surface of a recording medium, the abrasion resistance of the image is low.

In order to improve the characteristics of images recorded with a pigment ink, inks containing urethane resins have been investigated (see PCT Japanese Translation Patent Publication No. 2007-522285 and Japanese Patent Laid-Open Nos. 2008-179657 and 2011-144354). The ink described in PCT Japanese Translation Patent Publication No.2007-522285 contains a crosslinked urethane resin. The ink described in Japanese Patent Laid-Open No. 2008-179657 contains a urethane resin including a unit derived from a compound having three or more hydroxy groups and a soft segment containing a carboxylic acid group. The ink described in Japanese Patent Laid-Open No. 2011-144354 contains an urethane resin crosslinked with, for example, a tri- or more functional polyamine.

The present inventor investigated the above-mentioned pigment inks once again. The results demonstrated that the known inks containing crosslinked urethane resins need further improvement in the abrasion resistance of recorded images. It was also demonstrated that in ejection from a recording head of an ink jet system, irregular ejection occurs.

Accordingly, the present invention provides an aqueous ink capable of recording images having excellent abrasion resistance and suppressed in irregular ejection. The present invention also provides an ink cartridge and an ink jet recording method using the aqueous ink.

SUMMARY OF THE INVENTION

The present invention in its first aspect provides an aqueous ink as specified in claims 1 to 6.

The present invention in its second aspect provides an ink cartridge as specified in claim 7.

The present invention in its third aspect provides an ink jet recording method as specified in claim 8.

Further features of the present invention will become apparent from the following description of exemplary embodiments with reference to the attached drawings.

BRIEF DESCRIPTION OF THE DRAWINGS

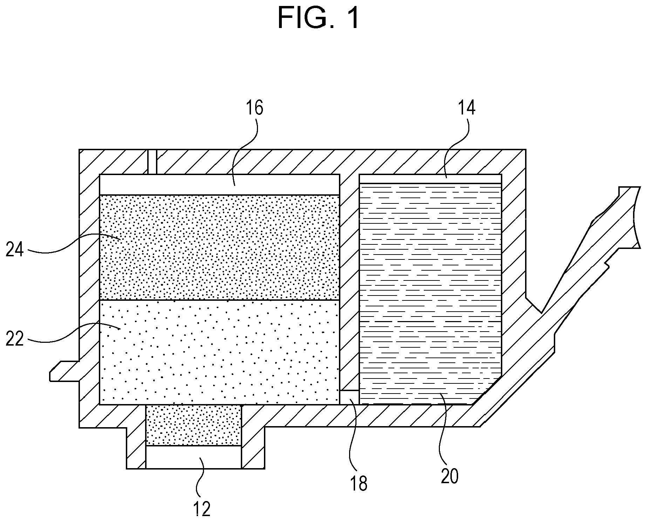

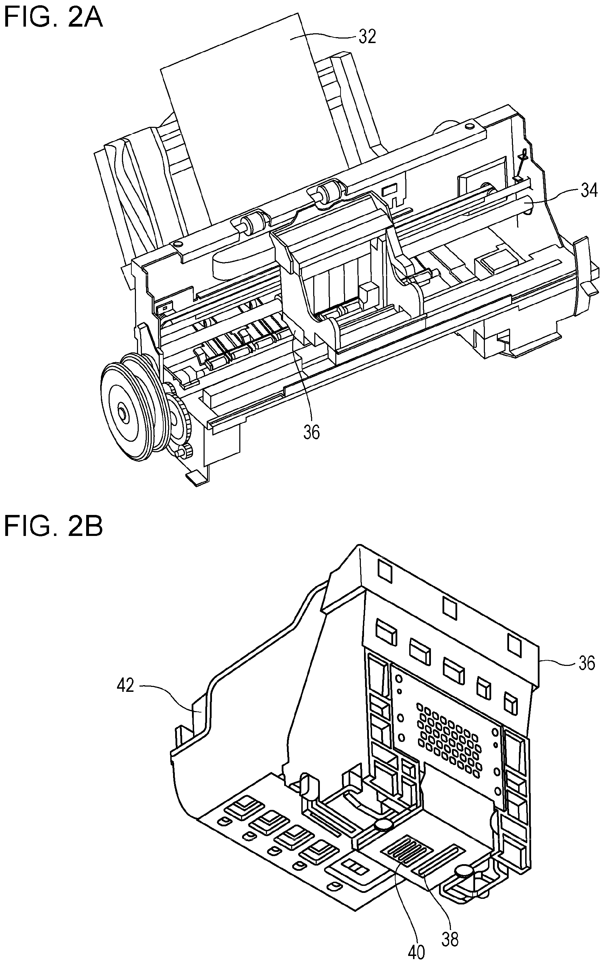

Fig. 1 is a cross-sectional view schematically illustrating an embodiment of the ink cartridge of the present invention. Figs. 2A and 2B are diagrams schematically illustrating an example of the ink jet recording apparatus to be used in the ink jet recording method of the present invention. Fig. 2A is a perspective view of the main portion of the ink jet recording apparatus, and Fig. 2B is a perspective view of the head cartridge.

DESCRIPTION OF THE EMBODIMENTS

The present invention will now be described in more detail with reference to embodiments. In the present invention, when a compound is a salt, the salt can be dissociated into an ion and can be present as the ion in an ink, but is expressed as "including a salt" for convenience. An aqueous ink for ink jet recording may be expressed simply as "ink". A physical property value is that at a normal temperature (25°C) unless otherwise specified.

The urethane resin is a resin synthesized using a (poly)isocyanate in a broad sense. The urethane resin usually used in an aqueous ink for ink jet recording is synthesized using a polyisocyanate and a component (such as a polyol or a polyamine) reacting with the polyisocyanate and optionally using a crosslinking agent and a chain extender. The urethane resin synthesized using these components is mainly composed of two segments: a hard segment and a soft segment.

The hard segment is constituted of units derived from compounds having relatively small molecular weights, such as a polyisocyanate, a polyamine, a polyol having acid group, a crosslinking agent and a chain extender. The hard segment includes a large number of urethane bonds, and the hard segment portion tends to be present in a dense form due to the hydrogen bonds between the urethane bonds. Accordingly, the hard segment mainly contributes to the strength of the urethane resin. In contrast, the soft segment is constituted of units derived from compounds having relatively large molecular weights, such as a polyol having no acid group. The soft segment is less likely present in a dense form, compared to the hard segment, and mainly contributes to the flexibility of the urethane resin. A film formed of a urethane resin (hereinafter, may be called a urethane resin film) forms a microphase-separated structure with the hard segment and the soft segment and thereby has both strength and flexibility and expresses high elasticity. These characteristics of a urethane resin film are closely related to the expression of abrasion resistance of the image.

The present inventor investigated various urethane resins for enhancing the abrasion resistance of images recorded with pigment inks. As a result, it was revealed that the addition of a urethane resin to an ink improves the abrasion resistance of recorded images, but causes irregular ejection of the ink.

In ejection of an ink containing a urethane resin from a recording head, the ink may overflow from the ejection orifice. When the ejection interval of an ink is long (a case of recording at a low frequency), even if the ink overflows, the ink returns into the flow channel by being pulled by the ink in the flow channel, and the overflowing state is easily cancelled. However, when the ejection interval of an ink is short (a case of recording at a high frequency), the subsequent ejection of the ink occurs before the overflowing ink completely returns into the flow channel. Consequently, the periphery of the ejection orifice of the recording head is continuously in a wet state with the ink. Accordingly, the ink adhered to the periphery of the ejection orifice dries with time, and the urethane resin precipitates to form a film. This film-formed portion has a surface energy lower than that of the other portion and is further easily wetted with the ink. Repetition of such a situation causes a state in which an ink droplet is pulled by substances attached to the periphery of the ejection orifice, leading to a misalignment of the ejection direction of the ink droplet from the desired direction. This phenomenon is "irregular ejection". The irregular ejection is a phenomenon occurring regardless of the ink ejection system. The misalignment of the ejection direction of an ink droplet, even if it is small immediately after the ejection of the ink, continues to become larger until the ink droplet reaches the recording medium. If irregular ejection occurs, the adhesion position of an ink dot deviates from the desired position on the recording medium, resulting in quality deterioration of the image.

As described above, the urethane resin is mainly synthesized using a polyisocyanate and a component reacting with the polyisocyanate. In order to increase the acid value of the urethane resin contained in an aqueous ink, the amount of the compound having a relatively small molecular weight, such as a polyol having acid group, is usually increased. Consequently, the amount of a polyol having no acid group is necessarily decreased. As a result, the urethane bond in the urethane resin is increased, and the soft segment is decreased. Accordingly, the flexibility of the urethane resin film tends to be reduced. Thus, an increase of the acid value enhances the re-solubility of the urethane resin in the liquid components during the evaporation of the ink to suppress the irregular ejection of the ink, but decreases the abrasion resistance of the image.

The present inventor studied for increasing the hydrophilicity of the urethane resin. In the study, the inventor investigated the control of the proportions of various bonds, i.e., the urethane bond and the urea bond, in the urethane resin, instead of a method of enhancing the hydrophilicity of the urethane resin by increasing the amount of the polyol having acid group. Specifically, the urea bond based on a tri- or more functional polyamine and the urethane bond in the molecular chain formed by a polyisocyanate and a polyol were investigated.

A urethane resin including a unit derived from a tri- or more functional polyamine has a urea bond formed by a reaction between an isocyanate group and an amino group. The urethane resin chain branches at the urea bond as the starting point to form a three-dimensional crosslinked structure. As a result, the strength of the urethane resin film is enhanced to readily improve the abrasion resistance.

Although a urea bond (-NH-CO-NH-) has two imino groups, a urethane bond (-NH-COO-) merely has one imino group. The urea bond therefore forms a stronger hydrogen bond with a component dispersing a pigment, compared to the urethane bond. Accordingly, a urea bond easily interacts with a pigment compared to a urethane bond. If each urethane resin has the same number of bonds in total, in the point of the bonds possessed by a urethane resin, a urethane resin having a larger amount of the urea bond tends to be present near the pigment particle also after application of the ink onto a recording medium, which is advantageous for improvement in abrasion resistance.

However, a large amount of the urea bond in a urethane resin is disadvantageous from the viewpoint of irregular ejection. A urethane resin having a large amount of the urea bond tends to be present in a state in which the resin chain is folded due to the interaction occurring between multiple urea bonds. The ink containing a urethane resin adheres to the periphery of an ejection orifice. The ink evaporates to precipitate the urethane resin. The urethane resin precipitated once is hardly dissolved in the subsequently adhering ink (low re-solubility) and rigidly adheres to the periphery of the ejection orifice to cause occurrence of irregular ejection.

That is, a method capable of achieving both crosslinking and prevention of aggregation for a urethane resin is necessary. In order to achieve this, the present inventor has studied and has found the following two requirements. Each of the requirements will be described.

A first requirement is that the rate of the urea bond based on a tri- or more functional polyamine accounting for the total of the urethane bond and the urea bond in the urethane resin is 20% or less. This requirement is an index showing the degree of the presence of the urea bond formed by a unit derived from the tri- or more functional polyamine and a unit derived from the polyisocyanate. The unit derived from the tri- or more functional polyamine serves as a crosslinking point of the urethane resin to contribute to improvement in abrasion resistance, but also causes occurrence of irregular ejection by interaction due to the urea bond. Accordingly, it is important that although the unit derived from a tri- or more functional polyamine exists to some extent, the amount thereof is not too high. If the above-mentioned rate is more than 20%, the urethane resin is apt to aggregate, and irregular ejection cannot be prevented.

A second requirement is that the proportion of the number of urethane bonds to the theoretical molecular weight of the molecular chain constituted of units respectively derived from a polyisocyanate and a polyol is 40 micromoles or more to 60 micromoles or less. The details of the method of calculating this proportion are described later. This requirement is an index showing the degree of the presence of the urethane bond per unit molecular weight. The number of urethane bonds per unit molecular weight has a correlation with the strength of the interaction between multiple urethane bonds present in the molecular chain of the urethane resin. If the above-mentioned proportion is less than 40 micromoles, the number of urethane bonds per unit molecular weight is small to weaken the interaction and give a low-strength urethane resin film, resulting in insufficient abrasion resistance. In contrast, if the proportion is more than 60 micromoles, the number of urethane bonds per unit molecular weight is large to strengthen the interaction and reduce the re-solubility of the urethane resin, resulting in being incapable of preventing irregular ejection.

The characteristics of the urethane resin contained in the ink of the present invention are summarized as follows. The urethane resin chain is physically crosslinked by incorporating a unit derived from a tri- or more functional polyamine to achieve a strength of a urethane resin film such that the abrasion resistance is enhanced. In addition, the urethane resin can have an appropriate aggregation property capable of achieving both abrasion resistance and prevention of irregular ejection by controlling the number of urethane bonds present in the molecular chain between urea bonds based on a polyamine (i.e., crosslinking point). By satisfying all of these requirements, contradictory characteristics, abrasion resistance and prevention of irregular ejection, are compatible. Ink

Each component constituting an aqueous ink for ink jet recording of the present invention will now be described in detail.

Urethane resin

As described above, the urethane resin that is generally contained in aqueous inks for ink jet recording is synthesized using at least a polyisocyanate and a component (such as a polyol or a polyamine) reacting with the polyisocyanate and optionally a crosslinking agent and a chain extender. The urethane resin contained in the ink of the present invention can be synthesized using a polyisocyanate, a polyol and a tri- or more functional polyamine. In this urethane resin, the rate (mol%) of the urea bond based on the tri- or more functional polyamine accounting for the total of the urethane bond and the urea bond is required to be 20 mol% or less. Furthermore, in this urethane resin, the proportion of the number of urethane bonds to the theoretical molecular weight of the molecular chain constituted of the units respectively derived from the polyisocyanate and the polyol is required to be 40 micromoles or more to 60 micromoles or less. In the present invention, the term "unit" regarding a urethane resin refers to a repeating unit of a single monomer. Each monomer being synthesized into a structural unit of a urethane resin will now be described.

In order to efficiently exhibit the effects of the unit derived from specific polyisocyanate possessed by a urethane resin, the urethane resin should not be a urethane resin having an acrylic resin chain (a so-called urethane-acryl composite resin) and also should not be an active energy ray-curable urethane resin, i.e., a urethane resin having a polymerizable group.

Polyisocyanate

The urethane resin contained in the ink of the present invention includes a unit derived from a polyisocyanate. The term "polyisocyanate" in the present invention refers to a compound having two or more isocyanate groups in the molecule. Examples of the polyisocyanate include aliphatic and aromatic polyisocyanates. The polyisocyanate can be diisocyanate. For example, when polyfunctional polyisocyanate having a structure, such as an allophanate structure, an uretdione structure, an isocyanurate structure or a biuret structure, is used, the amount thereof should be small.

Alternatively, such polyisocyanate should not be used.

Examples of the aliphatic polyisocyanate include a polyisocyanate having a chain structure, such as tetramethylene diisocyanate, hexamethylene diisocyanate, dodecamethylene diisocyanate, 2,2,4-trimethylhexamethylene diisocyanate, 2,4,4-trimethylhexamethylene diisocyanate, lysine diisocyanate, 2-methylpentane-1,5-diisocyanate and 3-methylpentane-1,5-diisocyanate; and a polyisocyanate having a cyclic structure, such as isophorone diisocyanate, hydrogenated xylylene diisocyanate, 4,4'-dicyclohexylmethane diisocyanate, 1,4-cyclohexane diisocyanate, methylcyclohexylene diisocyanate and 1,3-bis(isocyanatemethyl)cyclohexane.

Examples of the aromatic polyisocyanate include tolylene diisocyanate, 2,2'-diphenylmethane diisocyanate, 2,4'-diphenylmethane diisocyanate, 4,4'-diphenylmethane diisocyanate, 4,4'-dibenzyl diisocyanate, 1,5-naphthylene diisocyanate, xylylene diisocyanate, 1,3-phenylene diisocyanate, 1,4-phenylene diisocyanate, dialkyl diphenylmethane diisocyanate, tetraalkyl diphenylmethane diisocyanate and $\alpha,\alpha,\alpha',\alpha'$-tetramethylxylylene diisocyanate.

In particular, the polyisocyanate can be an aliphatic polyisocyanate, specifically an aliphatic polyisocyanate having a cyclic structure, such as isophorone diisocyanate.

In the urethane resin, the rate (mol%) of the unit derived from the polyisocyanate can be 10.0 mol% or more to 80.0 mol% or less, in particular, 20.0 mol% or more to 60.0 mol% or less.

Polyol

The component forming a unit constituting the urethane resin by the reaction with a polyisocyanate can be a polyol. The term "polyol" in the present invention refers to a compound having two or more hydroxy groups in the molecule, and examples thereof include a polyol having no acid group, such as a polyether polyol, a polyester polyol and a polycarbonate polyol; and a polyol having acid group.

In the urethane resin, the rate (mol%) of the unit derived from the polyol can be 10.0 mol% or more to 80.0 mol% or less, in particular, 20.0 mol% or more to 60.0 mol% or less.

Polyol having no acid group

Examples of the polyether polyol include addition polymers of alkylene oxides and polyols; and glycols, such as poly(alkylene glycol). Examples of the alkylene oxide include ethylene oxide, propylene oxide, butylene oxide and $\alpha$-olefin oxide. Examples of the polyol addition polymerized with alkylene oxide include diols, such as 1,3-propanediol, 1,3-butanediol, 1,4-butanediol, 1,5-pentanediol, 1,6-hexanediol, 3-methyl-1,5-pentanediol, 2-butyl-2-ethyl-1,3-propanediol, 1,4-cyclohexanediol, 1,4-cyclohexanedimethanol, 4,4-dihydroxyphenylpropane, 4,4-dihydroxyphenylmethane, hydrogenated bisphenol A, dimethylolurea and its derivatives; and triols, such as glycerin, trimethylolpropane, 1,2,5-hexanetriol, 1,2,6-hexanetriol, pentaerythritol, trimethylolmelamine and its derivatives and polyoxypropylenetriol. Examples of the glycol include poly(alkylene glycol), such as tetramethylene glycol, hexamethylene glycol, ethylene glycol, diethylene glycol, triethylene glycol, tetraethylene glycol, polyethylene glycol, propylene glycol, dipropylene glycol, tripropylene glycol, polypropylene glycol, poly(tetramethylene glycol) and neopentyl glycol; and ethylene glycol-propylene glycol copolymers.

Examples of the polyester polyol include acid esters. Examples of the acid component constituting the acid ester include aromatic dicarboxylic acids, such as phthalic acid, naphthalenedicarboxylic acid, biphenyldicarboxylic acid and tetrahydrophthalic acid; alicyclic dicarboxylic acids, such as hydrogenated products of the above-mentioned aromatic dicarboxylic acids; and aliphatic dicarboxylic acids, such as malonic acid, succinic acid, tartaric acid, oxalic acid, glutaric acid, adipic acid, pimelic acid, subelic acid, azelaic acid, sebacic acid, alkylsuccinic acid, linolenic acid, maleic acid, fumaric acid, mesaconic acid, citraconic acid and itaconic acid. Anhydrides, salts and derivatives (alkyl esters and acid halides) of these acid components can also be used as acid components. Examples of the component forming an ester with an acid component include polyols, such as diol and triol; and glycols, such as poly(alkylene glycol). Examples of the polyols and the glycols include those exemplified as components constituting the polyether polyol.

The polycarbonate polyol can be produced by a known method and is specifically, for example, alkanediol-based polycarbonate diol, such as polyhexamethylene carbonate diol. Alternatively, the polycarbonate polyol can be the polycarbonate diol produced by a reaction of a carbonate component, such as alkylene carbonate, diaryl carbonate or dialkyl carbonate, or phosgene and an aliphatic diol component.

The polyol having no acid group can be polyether polyol, in particular, polypropylene glycol. The polypropylene glycol has a unit structure of which the number of carbon atoms is between the numbers of carbon atoms of polyethylene glycol and polytetramethylene glycol. Accordingly, a urethane resin film formed by using polypropylene glycol has characteristics between those of films respectively formed using polyethylene glycol and polytetramethylene glycol and is therefore excellent in balance between strength and flexibility and also at high levels. In addition, a urethane resin synthesized using polypropylene glycol tends to be present near the pigment particle due to the effect of the branched methyl group in the propylene oxide structure. Due to these reasons, abrasion resistance can be particularly improved.

The polyol having no acid group can have a number-average molecular weight of 450 or more to 4,000 or less. In particular, a polyether polyol having a number-average molecular weight of 450 or more to 4,000 or less can be used. A reduction in number-average molecular weight increases the number of urethane bonds in the urethane resin and increases the rigidity of the polyol. Consequently, the strength of the urethane resin film tends to be increased. An increase in number-average molecular weight decreases the polyol as a reaction partner of the polyisocyanate to reduce the number of urethane bonds in the urethane resin and to enhance the extensibility of the polyol. Consequently, the flexibility of the urethane resin film tends to be enhanced. Accordingly, the number-average molecular weight of the polyol having no acid group adjusted within a range of 450 or more to 4,000 or less enhances the balance between the strength and the flexibility of the urethane resin film to further improve the abrasion resistance of the recorded image. In contrast, if the polyol having no acid group has a number-average molecular weight of less than 450, the urethane resin film is hard and brittle, leading to a risk of insufficient abrasion resistance. If the number-average molecular weight is more than 4,000, the urethane resin film has too high flexibility, also leading to a risk of insufficient abrasion resistance.

In the urethane resin, the rate (mol%) of the unit derived from the polyol having no acid group accounting for the total amount of the units derived from all the polyol can be 1.0 mol% or more to 100.0 mol% or less, preferably 5.0 mol% or more to 50.0 mol% or less, and more preferably 5.0 mol% or more to 40.0 mol% or less. Polyol having acid group

Examples of the polyol having acid group include polyols having acid groups such as a carboxylic acid group, a sulfonic acid group, a phosphoric acid group and a phosphonic acid group. In particular, the acid group can be a carboxylic acid group. Examples of the polyol having carboxylic acid group include dimethylolacetic acid, dimethylolpropionic acid, dimethylolbutanoic acid and dimethylolbutyric acid. Above all, dimethylolpropionic acid and dimethylolbutanoic acid, in particular, dimethylolpropionic acid can be used. The acid group of the polyol having acid group may be in a salt form, and examples of the cation forming the salt include alkali metal ions, such as lithium, sodium and potassium ions; and cations of organic amines, such as ammonium and dimethylamine ions. The molecular weight of a general-purpose polyol having acid group is about 400 at the highest, and the unit derived from the polyol having acid group basically becomes a hard segment of the urethane resin.

In the urethane resin, the rate (mol%) of the unit derived from the polyol having acid group accounting for the total amount of the units derived from all the polyol can be 0.0 mol% or more to 100.0 mol% or less, preferably 30.0 mol% or more to 95.0 mol% or less, and more preferably 50.0 mol% or more to 95.0 mol% or less. Polyamine

The component forming a unit constituting a urethane resin by the reaction with a polyisocyanate can be a polyamine including a tri- or more functional polyamine. In the present invention, the term "polyamine" refers to a compound including two or more "amino groups or imino groups" in the molecule.

Examples of the polyamine include monoamine having a plurality of hydroxy groups, such as dimethylolethylamine, diethanolmethylamine, dipropanolethylamine and dibutanolmethylamine; bifunctional polyamine, such as ethylenediamine, propylenediamine, hexylenediamine, isophoronediamine, xylylenediamine, diphenylmethanediamine, hydrogenated diphenylmethanediamine and hydrazine; and tri- or more functional polyamine, such as diethylenetriamine, triethylenetetramine, tetraethylenepentamine, hexamethylenetriamine, 3,3-diaminodipropylamine, polyamidepolyamine and polyethylenepolyimine. For convenience, compounds having a plurality of hydroxy groups and one "amino group or imino group" are also exemplified as "polyamine". As in the general-purpose polyol having acid group, the molecular weight of a general-purpose polyamine is about 400 at the highest, and the unit derived from a polyamine basically becomes a hard segment of the urethane resin. The polyamine can have a molecular weight of 50 to 200, in particular, 80 to 180.

Above all, diethylenetriamine or triethylenetetramine, in particular, diethylenetriamine can be used. Although these compounds have three or four "amino groups or imino groups", they are compact molecules and therefore efficiently react with isocyanate groups to readily form crosslinked structures, and they have moderate flexibility and therefore contribute also to the flexibility of the urethane resin.

The rate (mol%) of the unit derived from the polyamine in the urethane resin can be 0.1 mol% or more to 15.0 mol% or less, preferably 0.1 mol% or more to 10.0 mol% or less, and more preferably 0.5 mol% or more to 8.0 mol% or less.

Other crosslinking agent and chain extender

In the synthesis of the urethane resin, a crosslinking agent (referred to as "other crosslinking agent") different from the tri- or more functional polyamine and a chain extender may be used. Usually, a crosslinking agent is used in synthesis of a prepolymer, and a chain extender is used in a chain extension reaction of the previously synthesized prepolymer. Basically, the crosslinking agent and the chain extender can be appropriately selected from water and, for example, the above-mentioned polyisocyanate, polyol and a polyamine depending on the purpose such as crosslinking and chain extension. The chain extender may be a compound that can crosslink a urethane resin.

Neutralizing agent

The acid group of the urethane resin can be neutralized with an alkali metal ion and at least one ammonium type ion of an ammonium ion and an organic ammonium ion. The neutralization ratio of the acid group can be 80% or more based on the whole acid groups in the urethane resin, and the neutralization ratio by the ammonium type ion can be 1% or more to less than 45%. If the neutralization ratio is less than 80% based on the whole acid groups, the aggregation properties of the urethane resin in an ink is enhanced, leading to a risk of insufficient prevention of irregular ejection. The neutralization ratio can be 100% or less of the whole acid groups. If the neutralization ratio by the ammonium type ion is less than 1%, a reduction in pH of the ink due to protons generated by decomposition of the urethane resin cannot be prevented. Consequently, the urethane resin in the ink becomes unstable, and the aggregation properties are enhanced, leading to a risk of insufficient prevention of irregular ejection. If the neutralization ratio by the ammonium type ion is 45% or more, the aggregation properties of the urethane resin during evaporation of the ink are enhanced, leading to a risk of insufficient prevention of irregular ejection. The neutralization ratio by the ammonium type ion can be 2% or more to 40% or less.

The neutralization ratio by the alkali metal ion may be determined considering the total neutralization ratio of the acid group and the neutralization ratio by the ammonium type ion and, specifically, can be 45% or more to less than 99%, in particular, 46% or more to 98% or less.

Examples of the alkali metal ion include a lithium ion, a sodium ion and a potassium ion. In order to neutralize the acid group in a urethane resin with an alkali metal ion, a hydroxide of an alkali metal (such as lithium hydroxide, sodium hydroxide and potassium hydroxide) can be used. In such a case, the alkali metal ion generated by ionic dissociation of a hydroxide of an alkali metal neutralizes the acid group in the urethane resin. In particular, the alkali metal ion can be a potassium ion.

Examples of the ammonium type ion include an ammonium ion ($NH_4^+$) and an organic ammonium ion ($NX_4^+$, where X represents a hydrogen atom or an organic group, and at least one of Xs represents an organic group). In order to neutralize the acid group in a urethane resin with an ammonium type ion, a compound represented by Formula (1) or Formula (2) can be used. In such a case, the ammonium type ion generated by ionization or ionic dissociation of the compound neutralizes the acid group in the urethane resin. The term "mono- to tri-" in the following description means mono, di and tri, and the term "mono- to tetra-" means mono, di, tri and tetra.

$$\text{Formula (1) :} \qquad NR_1R_2R_3$$

where, $R_1$, $R_2$ and $R_3$ each independently represent a hydrogen atom, an alkyl group having 1 to 6 carbon atoms or a hydroxyalkyl group having 1 to 6 carbon atoms.

Examples of the compound represented by Formula (1) include ammonia; aliphatic amines, such as mono- to tri-methylamine, mono- to tri-ethylamine, mono- to tripropylamine, mono- to tri-butylamine, mono- to tri-pentylamine and mono- to tri-hexylamine; and alkanolamines, such as mono- to tri-ethanolamine, mono- to triisopropanolamine, dimethylethanolamine and methyldiethanolamine.

The compound represented by Formula (1) is ionized in an ink as follows, and the generated ammonium type ion neutralizes the acid group of a urethane resin.

$$NR_1R_2R_3 + H_2O \rightarrow N^+HR_1R_2R_3 + OH^-.$$

$$\text{Formula (2) :} \qquad N^+R_1R_2R_3R_4A^-$$

where, $R_1$, $R_2$, $R_3$ and $R_4$ each independently represents a hydrogen atom, an alkyl group having 1 to 6 carbon atoms or a hydroxyalkyl group having 1 to 6 carbon atoms; and $A^-$ represents a monovalent anion.

Examples of the compound represented by Formula (2) include ammonium salts; aliphatic amine salts, such as mono- to tetra-methylamine salts, mono- to tetra-ethylamine salts, mono- to tetra-propylamine salts, mono- to tetra-butylamine salts, mono- to tetra-pentylamine salts and mono- to tetra-hexylamine salts; and alkanolamine salts, such as mono- to tetra-ethanolamine salts and mono- to tetra-isopropanolamine salts. Examples of the monovalent anion ($A^-$) constituting the compound (ammonium salt or amine salt) represented by Formula (2) include a hydroxide ion, a halide ion and a monovalent inorganic acid anion. Examples of the halide ion include a fluorine ion ($F^-$), a chloride ion ($Cl^-$), a bromide ion ($Br^-$) and an iodide ion ($I^-$). Examples of the monovalent inorganic acid anion include a nitrate ion ($NO_3^-$).

The compound represented by Formula (2) is ionically dissociated in an ink as follows, and the generated ammonium type ion neutralizes the acid group of a urethane resin.

$$N^+R_1R_2R_3R_4A^- \rightarrow N^+R_1R_2R_3R_4 + A^-.$$

In order to neutralize the acid group of a urethane resin, the ammonium type ion generated by ionization of a compound represented by Formula (1), specifically, $N^+H(CH_2CH_2OH)_3$ (cation derived from triethanolamine), can be used. The use of $N^+H(CH_2CH_2OH)_3$ can efficiently prevent the pH of an ink from being decreased by the protons generated by decomposition of the urethane resin and thereby can significantly prevent irregular ejection.

The type of an agent for neutralizing the acid group of a urethane resin can be analyzed using the urethane resin isolated from an ink. The isolated urethane resin is diluted with water to prepare a sample, and the sample is subjected to electrophoretic chromatography to separate the neutralizing agent. Subsequently, for example, mass spectrometry and an NMR method are carried out for identification of the type and quantitative measurement of the neutralizing agent. The neutralization ratio of a neutralizing agent can be calculated from the acid value measured by the above-described method. In Examples described below, analysis was performed as follows. A liquid containing a urethane resin was diluted with water to prepare a sample. This sample was subjected to electrophoretic chromatography (trade name: "Agilent 1600 CE", manufactured by Agilent Technologies) to separate a neutralizing agent, and identification of the type and measurement of the quantity of the neutralizing agent were performed by mass spectrometry. The neutralization ratio of the neutralizing agent was calculated from thus-obtained the type and quantitative value of the neutralizing agent and the acid value measured by the above-described method. When an aqueous ink for ink jet recording has a pH within a general range, i.e., about 5.0 to 10.0, it can be said that the agent neutralizing the acid group of the urethane resin is not changed even if the ink is prepared by a usual procedure.

Physical properties and characteristics of urethane resin Rate of urea bond based on a polyamine accounting for the total of urethane bond and urea bond

The rate (mol%) of the urea bond based on a polyamine accounting for the total of the urethane bond and the urea bond in a urethane resin should be 20 mol% or less and can be 15 mol% or less. As described above, if the rate is more than 20 mol%, irregular ejection cannot be prevented. The rate is more than 0 mol% and can be 1 mol% or more.

The rate of the urea bond based on a polyamine accounting for the total of the urethane bond and the urea bond in a urethane resin can be adjusted by, for example, the following two methods. In a first method, the amount of the tri- or more functional polyamine compound used in the synthesis of a urethane resin is controlled. In this method, the amount of the urea bond generated by a reaction of the polyamine compound and an isocyanate group is controlled. In a second method, the residual rate of the unreacted isocyanate group is controlled during the phase inversion of the urethane resin into water. In this method, the amount of the urea bond generated by a reaction of water and an isocyanate group is controlled. In Examples described below, the rate of the urea bond based on a polyamine accounting for the total of the urethane bond and the urea bond was adjusted by the second method.

The rate of the urea bond based on a polyamine accounting for the total of the urethane bond and the urea bond in a urethane resin can be determined as follows. The urethane resin as an analysis object can be extracted by the method described in the paragraph "Analysis method".

Regarding the urea bond based on a polyamine, a urethane resin is analyzed by carbon nuclear magnetic resonance ($^{13}$C-NMR) spectrometry, and the position of the peak corresponding to the urea bond based on the polyamine and the integrated value of the peak are determined. In addition, all the peaks corresponding to the urethane bond and their integrated value and the peaks corresponding to the urea bond and their integrated value are determined. From these integrated values, the rate of the urea bond based on a polyamine accounting for the total of the urethane bond and the urea bond in the urethane resin can be calculated. The urethane resin as an analysis object can be extracted by the method described in the paragraph "Analysis method".

The rate of the urea bond based on tri- or more functional polyamine accounting for the total amount of the urea bonds in a urethane resin can be 95 mol% or more. Above all, the rate can be 100 mol%, that is, all of the urea bonds in a urethane resin can be the urea bond based on tri- or more functional polyamine.

Proportion of the number of urethane bonds to theoretical molecular weight of molecular chain constituted of units respectively derived from a polyisocyanate and a polyol

The proportion of the number of urethane bonds to the theoretical molecular weight of the molecular chain constituted of units respectively derived from a polyisocyanate and a polyol should be 40 micromoles or more to 60 micromoles or less. As described above, a proportion of less than 40 micromoles gives insufficient abrasion resistance. A proportion of more than 60 micromoles cannot prevent irregular ejection.

The proportion of the number of urethane bonds to the theoretical molecular weight of the molecular chain constituted of units respectively derived from a polyisocyanate and a polyol can be adjusted by, for example, adjusting the types and the amounts of the polyisocyanate and the polyol used in the synthesis of a urethane resin.

The proportion of the number of urethane bonds to the theoretical molecular weight of the molecular chain constituted of units respectively derived from a polyisocyanate and a polyol can be determined as follows. The urethane resin as an analysis object can be extracted by the method described in the paragraph "Analysis method".

The number (micromoles) of urethane bonds can be calculated from the molar number of the urethane bonds based on a polyol. The molar number of the urethane bonds based on the polyol in a urethane resin can be calculated by performing carbon nuclear magnetic resonance ($^{13}$C-NMR) spectrometry analysis of the urethane resin and calculating the integrated value of the peak corresponding to the urethane bond based on the polyol.

The theoretical molecular weight of a molecular chain constituted of units respectively derived from a polyisocyanate and a polyol can be determined by the following procedure. A urethane resin is subjected to a proton nuclear magnetic resonance ($^{1}$H-NMR) method, and the types of, for example, a polyisocyanate and a polyol are determined from the positions of the peaks obtained by the analysis. In addition, the urethane resin is subjected to carbon nuclear magnetic resonance ($^{13}$C-NMR) spectrometry, and the composition ratio of each component is calculated from the results of the analysis. The theoretical molecular weight is determined from these analysis results based on the following expression. In the expression, for simplicity, the rates are shown as those of compounds, such as "polyisocyanate", but the actual rates are those of "units", such as a "unit derived from polyisocyanate". In the mathematical expression, the "rate (mass%) of the unit derived from a compound" of the numerator is the rate (mass%) of the unit accounting for the urethane resin, and the "rate (mol%) of the unit derived from a compound" of the denominator is the value obtained by dividing the "rate (mass%) of the unit derived from a compound" by the molecular weight of the compound.

$$\text{Theoretical molecular weight of molecular chain constituted of polyisocyanate and polyol} = \frac{\text{rate (mass\%) of polyisocyanate + rate (mass\%) of polyol}}{\text{rate (mol\%) of polyisocyanate - rate (mol\%) of polyol}}$$

The "molar number (moles) of the urethane bonds based on a polyol" calculated as described above is divided by the "theoretical molecular weight", the unit is changed ($\times 10^6$) into micromoles. Thus, the proportion of the number of urethane bonds to the theoretical molecular weight of the molecular chain constituted of the units respectively derived from the polyisocyanate and the polyol can be calculated.

Acid value

The urethane resin can have an acid value of 40 mgKOH/g or more to 100 mgKOH/g or less, in particular, 50 mgKOH/g or more. If the acid value of a urethane resin is less than 40 mgKOH/g, the hydrophilicity of the urethane resin is too low, leading to a risk of insufficient prevention of irregular ejection. In contrast, if the acid value of a urethane resin is more than 100 mgKOH/g, the resulting urethane resin film is too rigid, leading to a risk of insufficient abrasion resistance of the image. The acid value of a urethane resin can be adjusted by, for example, the rate of the unit derived from a polyol having acid group in the urethane resin.

The acid value of a urethane resin can be measured by a titration method. In Examples described below, the acid value of a urethane resin dissolved in tetrahydrofuran was measured by colloid titration using potential difference with a potential-difference automatic titration apparatus (trade name: AT-510, manufactured by Kyoto Electronics Manufacturing Co., Ltd.) loaded with a flow potential titration unit (PCD-500). The titration reagent used in this occasion was an ethanol solution of potassium hydroxide.

Weight-average molecular weight

The urethane resin can have a weight-average molecular weight of 4,000 or more to 25,000 or less. If the weight-average molecular weight of the urethane resin is less than 4,000, it is difficult that the resulting urethane resin film has high flexibility, leading to a risk of insufficient abrasion resistance of the image. In contrast, if the weight-average molecular weight of the urethane resin is more than 25,000, physical entanglement of the molecular chain cannot be sufficiently prevented, leading to a risk of insufficient prevention of irregular ejection. The weight-average molecular weight is a value in terms of polystyrene measured by gel permeation chromatography (GPC).

Gel fraction

The urethane resin can have a gel fraction of 0%. The "gel fraction" indicates the solubility of a urethane resin in methyl ethyl ketone as a solvent that can easily dissolve a resin and is an index showing the degree of crosslinking in the urethane resin and the degree of aggregation properties of the urethane resin. A lower gel fraction tends to decrease the degree of crosslinking and the aggregation properties, and a more gel fraction tends to increase the degree of crosslinking and the aggregation properties. If the gel fraction of the urethane resin is 0%, the aggregation properties of the urethane resin are low, and the liquid components tend to permeate into the folded urethane resin chain. Accordingly, irregular ejection can be significantly prevented.

The gel fraction of a urethane resin is the fraction of "gel", which is a component of the urethane resin remaining without being dissolved in methyl ethyl ketone, and is determined by calculating the rate (mass%) of the mass of the gel accounting for the mass of the urethane resin used as the sample. The gel fraction is calculated as follows. A urethane resin and water are mixed with each other to prepare a liquid containing the urethane resin. A urethane resin coating film (mass B) having a uniform thickness is formed using the resulting liquid and is dried. This coating film is immersed in methyl ethyl ketone and is left in this state for 24 hours in an environment at a temperature of 23°C. From the remaining urethane resin (gel, mass A) without being dissolved, the gel fraction (mass%) is then calculated based on the expression: $A/B \times 100$ (%). The lower limit of the gel fraction is 0 mass%, and the upper limit is 100 mass%.

State of urethane resin

The urethane resin may be dissolved in an aqueous medium constituting an ink and exist in a state without particle size (water-soluble urethane resin) or may be dispersed in an aqueous medium constituting an ink and exist in a state with particle size (water dispersible urethane resin). A water-insoluble urethane resin exists in a state of resin particles in an ink. In particular, a water-soluble urethane resin can be used.

Whether a urethane resin is "water-soluble" or "water-dispersible" can be judged by the following method. A solution containing a urethane resin (resin solid content: 10 mass%) neutralized with an alkali (e.g., sodium hydroxide or potassium hydroxide) in an amount corresponding to the acid value is prepared. The prepared solution is then diluted 10-fold (volume basis) with pure water to prepare a sample solution. The particle size of the resin in the sample solution is measured by dynamic light scattering. If particles having a particle size are detected, the resin can be judged to be "resin particles". The measurement conditions on this occasion can be, for example, SetZero: 30 seconds, number of measurements: 3 times, measurement time: 180 seconds, shape: real spherical shape and index of refraction: 1.59. The particle size distribution measuring apparatus can be, for example, a particle size analyzer (e.g., trade name: "UPA-EX150", manufactured by Nikkiso Co., Ltd.) for dynamic light scattering, but the particle size distribution measuring apparatus and measurement conditions are not limited thereto.

Method of synthesizing urethane resin

The urethane resin can be synthesized by any known method for generally employed for synthesizing a urethane resin, such as the following method. Polyisocyanate is reacted with a compound (a polyol or a polyamine) reacting with the polyisocyanate in amounts giving a large number of isocyanate groups to synthesize a prepolymer having an isocyanate group at a terminal of the molecule. On this occasion, an organic solvent having a boiling point of 100°C or less may be used as needed, and the acid group of the prepolymer is neutralized with a neutralizing agent. Subsequently, the prepolymer is added to a solution containing, for example, a chain extender and a crosslinking agent to perform an extension reaction, a crosslinking reaction and so on. When an organic solvent is used, the organic solvent is then removed to obtain a urethane resin.

The number of a reactive group (e.g., isocyanate group, hydroxy group, amino group or imino group) per one molecule of a compound (e.g., a polyisocyanate, a polyol or a polyamine) to be used for synthesis of a urethane resin is determined depending on the characteristics of a desired urethane resin. For example, a compound having one reactive group per one molecule becomes a unit present at a molecular terminal of the urethane resin. A compound having two or more reactive groups per one molecule becomes a unit present at a position between different units constituting the urethane resin. In particular, a compound having three or more reactive groups per one molecule becomes a unit for crosslinking the urethane resin. In order to crosslink a urethane resin, a unit derived from a compound having three or more reactive groups per one molecule is used as a structural unit according to a desired degree of crosslinking. Conversely, in order not to crosslink a urethane resin, only a unit derived from a compound having one or two reactive groups per one molecule is used as a structural unit.

Analysis method

The composition of a urethane resin can be analyzed by the following method. A method for extracting a urethane resin from an ink containing the urethane resin will now be described. Specifically, the ink is centrifuged at 80,000 rpm, and the supernatant is collected. An excess amount of an acid (such as hydrochloric acid) is added to the supernatant to precipitate the urethane resin. The supernatant may be dried to collect the urethane resin. Alternatively, a urethane resin can be extracted from an ink using an organic solvent (e.g., hexane) that does not dissolve a pigment, but dissolves the urethane resin. Furthermore, the urethane resin can be analyzed in an ink, but by using the urethane resin (solid content) extracted by the above-described method, analysis with higher accuracy is possible.

The urethane resin collected as described above is dried and is dissolved in deuterated dimethyl sulfoxide to prepare a sample as a measurement object. This sample is subjected to a proton nuclear magnetic resonance ($^1$H-NMR) method, and the types of, for example, a polyisocyanate, a polyol and a polyamine including a tri- or more functional polyamine can be determined from the positions of the resulting peaks. Furthermore, the composition ratio of each component can also be calculated from the rate of the integrated value of the peak of chemical shift of the component. The number of repetitions of the polyol having no acid group unit is determined by carbon nuclear magnetic resonance ($^{13}$C-NMR) spectrometry analysis, and the number-average molecular weight can be calculated. The types of a polyisocyanate, a polyol, a polyamine including a tri- or more polyamine and so on can also be determined by pyrolysis gas chromatography analysis.

Content

The content (mass%) of the urethane resin in an ink can be 0.1 mass% or more to 10.0 mass% or less based on the total mass of the ink, in particular, 0.5 mass% or more to 3.0 mass% or less. The mass ratio of the urethane resin content (mass%) to the pigment content (mass%) based on the total mass of the ink can be 0.05 times or more to 10.00 times or less. If the mass ratio is less than 0.05 times, the abrasion resistance of the image may be insufficient. In contrast, if the mass ratio is more than 10.00 times, the prevention of irregular ejection may be insufficient. Pigment

The coloring material contained in the ink of the present invention is a pigment, such as an inorganic pigment and an organic pigment. Examples of the pigment species include inorganic pigments, such as carbon black, calcium carbonate and titanium oxide; and organic pigments, such as azo, phthalocyanine and quinacridone. The ink may further contain a dye, in addition to the pigment, for example, for toning. The content (mass%) of the pigment in the ink can be 0.5 mass% or more to 10.0 mass% or less based on the total mass of the ink, in particular, 1.0 mass% or more to 10.0 mass% or less.

The system of dispersing a pigment may be either a resin-dispersed pigment where a resin dispersant is used or a self-dispersible pigment not requiring a resin dispersant. In order to efficiently exhibit the film characteristics of a urethane resin and to enhance the abrasion resistance of an image, the interaction of the urethane resin and the pigment should be decreased to a certain degree. Accordingly, a resin-dispersed pigment using a resin, such as an acrylic resin, different from the urethane resin as a dispersant or a self-dispersible pigment not requiring a use of dispersant can be used.

The resin dispersant to be used in the resin-dispersed pigment can be any known (co)polymer that can be used in an ink for ink jet recording. The resin dispersant can be, for example, a copolymer (e.g., acrylic resin) having a hydrophilic unit and a hydrophobic unit. Examples of the hydrophilic unit include a unit derived from a hydrophilic monomer, such as (meth)acrylic acid and its salt. Examples of the hydrophobic unit include a unit derived from a monomer having an aromatic ring, such as a monomer having an aromatic ring, such as styrene and its derivative and benzyl (meth)acrylate and a unit derived from a hydrophobic monomer, such as a monomer including an aliphatic group such as (meth)acrylic acid ester.

The self-dispersible pigment can be a pigment of which the particle surface has an anionic group bonded directly or via an atomic group (-R-). Examples of the anionic group include -COOM, -SO$_3$M and -PO$_3$M$_2$, where Ms each independently represent a hydrogen atom, an alkali metal, ammonium (NH$_4$) or organic ammonium. Examples of the atomic group (-R-) include an alkylene group, an arylene group, an amide group, a sulfonyl group, an imino group, a carbonyl group, an ester group, an ether group and combinations of these groups.

Aqueous medium

The ink of the present invention at least contains water as an aqueous medium. The water can be deionized water (ion-exchanged water). The content (mass%) of water in an ink can be 10.0 mass% or more to 90.0 mass% or less based on the total mass of the ink, in particular, 50.0 mass% or more to 90.0 mass% or less.

The aqueous medium may further contain a water-soluble organic solvent. The water-soluble organic solvent may be any water-soluble solvent, such as mono- or polyvalent alcohol, poly(alkylene glycol), glycol ether, a nitrogen-containing polar solvent or a sulfur-containing polar solvent. The content (mass%) of the water-soluble organic solvent in an ink can be 3.0 mass% or more to 50.0 mass% or less based on the total mass of the ink.

Other additives

The ink of the present invention may further optionally contain a water-soluble organic compound that is a solid at ordinary temperature, for example, polyvalent alcohol, such as trimethylolpropane and trimethylolethane, and a urea derivative, such as urea and ethylene urea, in addition to the above-described components. Furthermore, the ink of the present invention may optionally contain various additives, such as a surfactant, a pH adjuster, a rust preventive, a preservative, a fungicide, an antioxidant, a reduction inhibitor, an evaporation promoter, a chelating agent and a water-soluble resin. Physical properties of ink

In the present invention, the ink can have a pH, a static surface tension and a viscosity within the following ranges at 25°C. The pH can be 5.0 or more to 10.0 or less, in particular, 7.0 or more to 9.5 or less. The static surface tension can be 30 mN/m or more to 45 mN/m or less, in particular, 35 mN/m or more to 40 mN/m or less. The viscosity can be 1.0 mPa·s or more to 5.0 mPa·s or less.

Ink cartridge

The ink cartridge of the present invention includes an ink and an ink storage portion storing the ink. The ink stored in the ink storage portion is the ink of the present invention described above. Fig. 1 is a cross-sectional view schematically illustrating an embodiment of the ink cartridge of the present invention. As shown in Fig. 1, the bottom of the ink cartridge is provided with an ink supplying port 12 for supplying the ink to a recording head. The inside of the ink cartridge is the ink storage portion for storing the ink. The ink storage portion is composed of an ink storing chamber 14 and an absorber containing chamber 16. The ink storing chamber 14 and the absorber containing chamber 16 are communicated with each other through a communication port 18. The absorber containing chamber 16 is communicated with the ink supplying port 12. The ink storing chamber 14 stores an ink 20 in a liquid form. The absorber containing chamber 16 stores absorbers 22 and 24 holding the ink impregnated therein. The ink storage portion need not have the ink storing chamber for storing the ink in a liquid form and may have a configuration of holding the entire ink with the absorbers. Alternatively, the ink storage portion need not have the absorbers and may have a configuration of storing the entire ink in a liquid form. Furthermore, the ink cartridge may be in a configuration including an ink storage portion and a recording head.

Ink jet recording method

The ink jet recording method of the present invention is a method of recording an image on a recording medium by ejecting the above-described ink of the present invention from a recording head of an ink jet system. Examples of the system for ejecting an ink include a system of applying a mechanical energy to an ink and a system of applying a thermal energy to an ink. In the present invention, a system of ejecting an ink by applying a thermal energy to an ink can be particularly employed. The process of the ink jet recording method may be a known process except that the ink of the present invention is used.

Figs. 2A and 2B are diagrams schematically illustrating an example of the ink jet recording apparatus to be used in the ink jet recording method of the present invention. Fig. 2A is a perspective view of the main portion of the ink jet recording apparatus, and Fig. 2B is a perspective view of the head cartridge. The ink jet recording apparatus includes a conveying means (not shown) for conveying a recording medium 32 and a carriage shaft 34. The carriage shaft 34 can be loaded with a head cartridge 36. The head cartridge 36 includes recording heads 38 and 40 and is configured such that an ink cartridge 42 is set. During the head cartridge 36 is conveyed in the main scanning direction along the carriage shaft 34, an ink (not shown) is ejected from the recording heads 38 and 40 to the recording medium 32. The recording medium 32 is conveyed in the sub-scanning direction by the conveying means (not shown) to record an image on the recording medium 32. The recording medium 32 is conveyed in the sub-scanning direction by the conveying means (not shown) to record an image on the recording medium 32. The recording medium as the object for recording with the ink of the present invention may be any recording medium and can be a paper-based recording medium having permeability, such as plain paper and recording media (glossy paper and art paper) having a coat layer. In contrast, recording media not based on paper, such as cloth, are desirably not employed.

EXAMPLES

The present invention will now be described in more detail by Examples and Comparative Examples, but is not limited to the following Examples within the scope of the invention. The terms "part(s)" and "%" regarding the amounts of components are based on mass unless otherwise specified.

The abbreviations are as follows. IPDI: isophorone diisocyanate, H12MDI: 4,4'-dicyclohexylmethane diisocyanate, HDI: hexamethylene diisocyanate, TDI: tolylene diisocyanate, MDI: diphenylmethane diisocyanate, PPG: polypropylene glycol, PES: polyester polyol, PC: polyhexamethylene carbonate diol, PTMG: polytetramethylene glycol, PEG: polyethylene glycol, DMPA: dimethylolpropionic acid, DMBA: dimethylolbutanoic acid, DETA: diethylenetriamine, TETA: triethylenetetramine, HMTA: hexamethylenetriamine, DADPA: 3,3'-diaminodipropylamine, EDA: ethylenediamine, TMP: trimethylolpropane, 126HT: 1,2,6-hexanetriol, TEA: triethanolamine. The numbers attached to PPG, PES, PC, PTMG and PEG mean the number-average molecular weights.

Synthesis of urethane resin

Urethane resins 1 to 45

Polyisocyanate and polyol having no acid group were placed in a four-necked flask equipped with a stirrer, a thermometer, a cooler and a nitrogen gas introducing pipe in the amounts shown in Table 1 and were reacted under a nitrogen gas atmosphere at 100°C for 1 hour. Subsequently, polyol having acid group in the amount shown in Table 1 and 200.0 parts (1,000 parts in urethane resin 20) of methyl ethyl ketone were added to the flask. The reaction was further performed at 78°C until the residual rate of the isocyanate group reached a desired level while measuring the residual rate of the isocyanate group by FT-IR. A crosslinking agent in the amount shown in Table 1 was added to the flask when the desired residual rate was obtained, and the reaction was performed at 60°C. The reaction was then stopped when the isocyanate group was not detected by FT-IR to obtain a reaction solution. The resulting reaction solution was cooled to 40°C, and ion-exchanged water was then added to the reaction solution. Neutralizing agents shown in Table 1 were added thereto in the amounts giving the neutralization ratios of the acid group shown in Table 1 while stirring at high speed with a homomixer to obtain each liquid containing a resin. Methyl ethyl ketone was distilled from the resulting liquid by heating under reduced pressure to prepare liquids containing urethane resins 1 to 45 (solid contents) each in an amount of 42.9%.
Liquids containing urethane resins 1 to 38 were each diluted with pure water such that the content of the resin was 1.0% to prepare each sample. The particle size of the resin in each sample was measured by a dynamic light scattering method with a particle size analyzer (trade name: "UPA-EX150", manufactured by Nikkiso Co., Ltd.) under the conditions, SetZero: 30 seconds, number of measurements: 3 times, measurement time: 180 seconds. As a result, in any of the urethane resins 1 to 38, the particle size was not measured to demonstrate that the urethane resin was water-soluble. In addition, in any of the urethane resins 1 to 38, the rate of the urea bond based on tri- or more functional polyamine accounting for the total amount of the urea bonds in the urethane resin was 100 mol%.

Urethane resin 46

A urethane resin was synthesized in accordance with the synthesis method (excluding the component relating to neutralization) of polyurethane dispersion 1 of PCT Japanese Translation Patent Publication No. 2007-522285. Ion-exchanged water was then added thereto, and neutralizing agents were added thereto in the amounts giving the neutralization ratios shown in Table 1 while stirring at high speed with a homomixer to obtain a liquid containing the resin. The solvent was distilled from the resulting liquid by heating under reduced pressure to obtain a liquid containing urethane resin 46 in an amount (solid content) of 42.9%. The gel fraction of urethane resin 46 measured as described above except that tetrahydrofuran was used instead of methyl ethyl ketone was more than 0%.

Urethane resin 47

A urethane resin was synthesized in accordance with the synthesis method (excluding the component relating to neutralization) of synthesis example 1 of Japanese Patent Laid-Open No. 2008-179657. Ion-exchanged water was then added thereto, and neutralizing agents were added thereto in the amounts giving the neutralization ratios shown in Table 1 while stirring at high speed with a homomixer to obtain a liquid containing the resin. The solvent was distilled from the resulting liquid by heating under reduced pressure to obtain a liquid containing urethane resin 47 in an amount (solid content) of 42.9%. The gel fraction of urethane resin 47 measured as described above except that tetrahydrofuran was used instead of methyl ethyl ketone was more than 0%.

Urethane resin 48

A urethane resin was synthesized in accordance with the synthesis method (excluding the component relating to neutralization) of PU-1 of Japanese Patent Laid-Open No. 2011-144354. Ion-exchanged water was then added thereto, and neutralizing agents were added thereto in the amounts giving the neutralization ratios shown in Table 1 while stirring at high speed with a homomixer to obtain a liquid containing the resin. The solvent was distilled from the resulting liquid by heating under reduced pressure to obtain a liquid containing urethane resin 48 in an amount (solid content) of 42.9%. The gel fraction of urethane resin 48 measured as described above except that tetrahydrofuran was used instead of methyl ethyl ketone was more than 0%.

Urethane resin 49

A urethane resin was synthesized in accordance with the synthesis method (excluding the component relating to neutralization) of PU-10 of Japanese Patent Laid-Open No. 2011-144354. Ion-exchanged water was then added thereto, and neutralizing agents were added thereto in the amounts giving the neutralization ratios shown in Table 1 while stirring at high speed with a homomixer to obtain a liquid containing the resin. The solvent was distilled from the resulting liquid by heating under reduced pressure to obtain a liquid containing urethane resin 49 in an amount (solid content) of 42.9%. The gel fraction of urethane resin 49 measured as described above except that tetrahydrofuran was used instead of methyl ethyl ketone was more than 0%.

Synthesis conditions and characteristics of urethane resin

Tables 1 and 2 show the synthesis conditions and characteristics of the above-described urethane resins. The "rate of the urea bond based on tri- or more functional polyamine accounting for the total of the urethane bond and the urea bond" is expressed as "Rate of urea bond based on a polyamine". The "proportion of the number of urethane bonds to the theoretical molecular weight of the molecular chain constituted of units respectively derived from a polyisocyanate and a polyol" is expressed as "The number of urethane bond/theoretical molecular weight". The gel fraction is the value measured for methyl ethyl ketone (expressed as "Gel fraction").

Table 1: Synthesis conditions of urethane resin

| | | Polyisocyanate (part) | Polyol having no acid group (part) | Polyol having acid group (part) | Polyamine (part) | Neutralizing agent 1 | | Neutralizing agent 2 | |
|---|---|---|---|---|---|---|---|---|---|
| | | | | | | Type | Neutralization ratio (%) | Type | Neutralization ratio (%) |
| Number of urethane resin | 1 | IPDI:24.4 | PPG2,000:37.2 | DMPA:10.5 | DETA:0.9 | KOH | 85 | TEA | 5 |
| | 2 | H12MDI:31.3 | PPG2,000:37.1 | DMPA:11.6 | DETA:1.0 | KOH | 85 | TEA | 5 |
| | 3 | HDI:16.4 | PPG2,000:36.8 | DMPA:9.0 | DETA:0.8 | KOH | 85 | TEA | 5 |
| | 4 | TDI:17.2 | PPG2,000:36.8 | DMPA:9.2 | DETA:0.8 | KOH | 85 | TEA | 5 |
| | 5 | MDI:28.9 | PPG2,000:36.9 | DMPA:11.2 | DETA:1.0 | KOH | 85 | TEA | 5 |
| | 6 | IPDI:24.4 | PES2,000:37.2 | DMPA:10.5 | DETA:0.9 | KOH | 85 | TEA | 5 |
| | 7 | IPDI:24.4 | PC2,000:37.2 | DMPA:10.5 | DETA:0.9 | KOH | 85 | TEA | 5 |
| | 8 | IPDI:10.2 | PPG450:7.8 | DMPA:3.1 | DETA:0.4 | KOH | 85 | TEA | 5 |
| | 9 | IPDI:42.5 | PPG4,000:75.9 | DMPA:20.1 | DETA:1.6 | KOH | 85 | TEA | 5 |
| | 10 | IPDI:24.4 | PTMG2,000:37.2 | DMPA:10.5 | DETA:0.9 | KOH | 85 | TEA | 5 |
| | 11 | IPDI:24.4 | PEG2,000:37.2 | DMPA:10.5 | DETA:0.9 | KOH | 85 | TEA | 5 |
| | 12 | IPDI:24.6 | PPG2,000:36.8 | DMBA:11.7 | DETA:0.9 | KOH | 85 | TEA | 5 |
| | 13 | IPDI:24.4 | PPG2,000:37.2 | DMPA:10.5 | TETA:1.0 | KOH | 85 | TEA | 5 |
| | 14 | IPDI:24.3 | PPG2,000:36.4 | DMPA:10.5 | HMTA:1.9 | KOH | 85 | TEA | 5 |
| | 15 | IPDI:24.4 | PPG2,000:37.0 | DMPA:10.5 | DADPA:1.2 | KOH | 85 | TEA | 5 |
| | 16 | IPDI:23.6 | PPG2,000:43.2 | DMPA:11.2 | DETA:0.1 | KOH | 85 | TEA | 5 |
| | 17 | IPDI:25.4 | PPG2,000:33.1 | DMPA:10.0 | DETA:1.6 | KOH | 85 | TEA | 5 |
| | 18 | IPDI:18.5 | PPG2,000:24.1 | DMPA:7.3 | DETA:1.1 | KOH | 85 | TEA | 5 |
| | 19 | IPDI:27.5 | PPG2,000:35.9 | DMPA:10.9 | DETA:1.7 | KOH | 85 | TEA | 5 |
| | 20 | IPDI:111.8 | PEG2,000:883.9 | - | DETA:4.2 | - | - | - | - |
| | 21 | IPDI:24.5 | PPG2,000:76.7 | DMPA:7.9 | DETA:0.9 | KOH | 85 | TEA | 5 |
| | 22 | IPDI:23.4 | PPG2,000:57.1 | DMPA:8.6 | DETA:0.9 | KOH | 85 | TEA | 5 |
| | 23 | IPDI:37.2 | PPG2,000:20.1 | DMPA:18.4 | DETA:1.4 | KOH | 85 | TEA | 5 |
| | 24 | IPDI:46.2 | PPG2,000:17.7 | DMPA:23.4 | DETA:1.7 | KOH | 85 | TEA | 5 |
| | 25 | IPDI:24.4 | PPG2,000:37.2 | DMPA:10.5 | DETA:0.9 | KOH | 85 | TEA | 5 |
| | 26 | IPDI:24.4 | PPG2,000:37.2 | DMPA:10.5 | DETA:0.9 | KOH | 85 | TEA | 5 |
| | 27 | IPDI:24.4 | PPG2,000:37.2 | DMPA:10.5 | DETA:0.9 | KOH | 85 | TEA | 5 |
| | 28 | IPDI:24.4 | PPG2,000:37.2 | DMPA:10.5 | DETA:0.9 | KOH | 85 | TEA | 5 |
| | 29 | IPDI:24.4 | PPG2,000:37.2 | DMPA:10.5 | DETA:0.9 | KOH | 90 | - | - |
| | 30 | IPDI:24.4 | PPG2,000:37.2 | DMPA:10.5 | DETA:0.9 | KOH | 89 | TEA | 1 |
| | 31 | IPDI:24.4 | PPG2,000:37.2 | DMPA:10.5 | DETA:0.9 | KOH | 88 | TEA | 2 |
| | 32 | IPDI:24.4 | PPG2,000:37.2 | DMPA:10.5 | DETA:0.9 | KOH | 88 | TEA | 40 |
| | 33 | IPDI:24.4 | PPG2,000:37.2 | DMPA:10.5 | DETA:0.9 | KOH | 46 | TEA | 44 |
| | 34 | IPDI:24.4 | PPG2,000:37.2 | DMPA:10.5 | DETA:0.9 | KOH | 45 | TEA | 45 |
| | 35 | IPDI:24.4 | PPG2,000:37.2 | DMPA:10.5 | DETA:0.9 | - | - | TEA | 90 |
| | 36 | IPDI:24.4 | PPG2,000:37.2 | DMPA:10.5 | DETA:0.9 | KOH | 74 | TEA | 5 |
| | 37 | IPDI:24.4 | PPG2,000:37.2 | DMPA:10.5 | DETA:0.9 | KOH | 75 | TEA | 5 |
| | 38 | IPDI:24.5 | PPG2,000:76.7 | DMPA:7.9 | DETA:0.9 | - | - | TEA | 90 |
| | 39 | IPDI:23.6 | PPG2,000:44.0 | DMPA:11.3 | - | KOH | 85 | TEA | 5 |
| | 40 | IPDI:24.4 | PPG2,000:37.3 | DMPA:10.5 | EDA:0.8 | KOH | 85 | TEA | 5 |
| | 41 | IPDI:24.4 | PPG2,000:37.0 | DMPA:10.5 | TMP:1.2 | KOH | 85 | TEA | 5 |
| | 42 | IPDI:24.4 | PPG2,000:37.0 | DMPA:10.5 | 126HT:1.2 | KOH | 85 | TEA | 5 |
| | 43 | IPDI:25.3 | PPG2,000:32.2 | DMPA:9.9 | DETA:1.6 | KOH | 85 | TEA | 5 |
| | 44 | IPDI:17.1 | PPG2,000:26.0 | DMPA:7.3 | DETA:0.6 | KOH | 85 | TEA | 5 |
| | 45 | IPDI:27.1 | PPG2,000:41.3 | DMPA:11.6 | DETA:1.0 | KOH | 85 | TEA | 5 |
| | 46 | | | | | KOH | 85 | TEA | 5 |
| | 47 | | | | | KOH | 85 | TEA | 5 |
| | 48 | | | | | KOH | 85 | TEA | 5 |
| | 49 | | | | | KOH | 85 | TEA | 5 |

Table 2: Characteristics of urethane resin

| | | Neutralization ratio of all acid groups (%) | Rate of urea bond based on a polyamine (%) | The number of urethane bond/theoretical molecular weight (micromole) | Acid value (mgKOH/g) | Weight-average molecular weight | Gel fraction (%) |
|---|---|---|---|---|---|---|---|
| Number of urethane resin | 1 | 90 | 12 | 55 | 60 | 12,000 | 0 |
| | 2 | 90 | 12 | 55 | 60 | 12,000 | 0 |
| | 3 | 90 | 12 | 55 | 60 | 12,000 | 0 |
| | 4 | 90 | 12 | 55 | 60 | 12,000 | 0 |
| | 5 | 90 | 12 | 55 | 60 | 12,000 | 0 |
| | 6 | 90 | 12 | 55 | 60 | 12,000 | 0 |
| | 7 | 90 | 12 | 55 | 60 | 12,000 | 0 |
| | 8 | 90 | 12 | 55 | 60 | 12,000 | 0 |
| | 9 | 90 | 12 | 55 | 60 | 12,000 | 0 |
| | 10 | 90 | 12 | 55 | 60 | 12,000 | 0 |
| | 11 | 90 | 12 | 55 | 60 | 12,000 | 0 |
| | 12 | 90 | 12 | 55 | 60 | 12,000 | 0 |
| | 13 | 90 | 12 | 55 | 60 | 12,000 | 0 |
| | 14 | 90 | 12 | 55 | 60 | 12,000 | 0 |
| | 15 | 90 | 12 | 55 | 60 | 12,000 | 0 |
| | 16 | 90 | 1 | 55 | 60 | 12,000 | 0 |
| | 17 | 90 | 20 | 55 | 60 | 12,000 | 0 |
| | 18 | 90 | 12 | 40 | 60 | 12,000 | 0 |
| | 19 | 90 | 12 | 60 | 60 | 12,000 | 0 |
| | 20 | - | 12 | 55 | 0 | 12,000 | 0 |
| | 21 | 90 | 12 | 55 | 30 | 12,000 | 0 |
| | 22 | 90 | 12 | 55 | 40 | 12,000 | 0 |
| | 23 | 90 | 12 | 55 | 100 | 12,000 | 0 |
| | 24 | 90 | 12 | 55 | 110 | 12,000 | 0 |
| | 25 | 90 | 12 | 55 | 60 | 3,900 | 0 |
| | 26 | 90 | 12 | 55 | 60 | 4,000 | 0 |
| | 27 | 90 | 12 | 55 | 60 | 25,000 | 0 |
| | 28 | 90 | 12 | 55 | 60 | 26,000 | 0 |
| | 29 | 90 | 12 | 55 | 60 | 12,000 | 0 |
| | 30 | 90 | 12 | 55 | 60 | 12,000 | 0 |
| | 31 | 90 | 12 | 55 | 60 | 12,000 | 0 |
| | 32 | 90 | 12 | 55 | 60 | 12,000 | 0 |
| | 33 | 90 | 12 | 55 | 60 | 12,000 | 0 |
| | 34 | 90 | 12 | 55 | 60 | 12,000 | 0 |
| | 35 | 90 | 12 | 55 | 60 | 12,000 | 0 |
| | 36 | 79 | 12 | 55 | 60 | 12,000 | 0 |
| | 37 | 80 | 12 | 55 | 60 | 12,000 | 0 |
| | 38 | 90 | 12 | 55 | 30 | 3,900 | 0 |
| | 39 | 90 | 0 | 55 | 60 | 12,000 | 0 |
| | 40 | 90 | 0 | 55 | 60 | 12,000 | 0 |
| | 41 | 90 | 0 | 55 | 60 | 12,000 | 0 |
| | 42 | 90 | 0 | 55 | 60 | 12,000 | 0 |
| | 43 | 90 | 21 | 55 | 60 | 12,000 | 0 |
| | 44 | 90 | 12 | 39 | 60 | 12,000 | 0 |
| | 45 | 90 | 12 | 61 | 60 | 12,000 | 0 |
| | 46 | 90 | 75 | 395 | 18 | 12,000 | 25 |
| | 47 | 90 | 0 | 161 | 70 | 47,000 | 100 |
| | 48 | 90 | 12 | 79 | 60 | 30,000 | 100 |
| | 49 | 90 | 35 | 37 | 60 | 30,000 | 100 |

Preparation of pigment dispersion

Pigment dispersion 1

Carbon black (20.0 g), ((4-aminobenzoylamino)-methane-1,1-diyl)bisphosphonic acid monosodium salt (7.0 mmol), nitric acid (20.0 mmol) and pure water (200.0 mL) were mixed. The mixture was mixed with a Silverson mixer at 6,000 rpm at room temperature. After 30 minutes, 20.0 mmol of sodium nitrite dissolved in a small amount of water was gradually added to the mixture. The temperature of the mixture reached 60°C by this mixing, and the reaction was continued for 1 hour in this state. The pH of the mixture was then adjusted to 10 with an aqueous sodium hydroxide solution. After 30 minutes, 20.0 mL of pure water was added to the mixture, followed by diafiltration through spectrum membrane. The counter ion of the anionic group of the self-dispersible pigment was exchanged from a sodium ion to a potassium ion by an ion exchange process. The concentration of the pigment solid content was then adjusted to give Pigment dispersion 1. Pigment dispersion 1 contained a self-dispersible pigment having a $-C_6H_4-CONH-CH(PO(OK)_2)_2$ group bonded to the particle surface, and the content of the pigment was 30.0%.

Pigment dispersion 2

4-Amino-1,2-benzenedicarboxylic acid (1.5 g) cooled to 5°C was added to a solution of 5.0 g of concentrated hydrochloric acid dissolved in 5.5 g of water. The container containing this solution was placed in an ice bath, and the solution was maintained at 10°C or less by being stirred. To this solution was added a solution of 1.8 g of sodium nitrite dissolved in 9.0 g of water of 5°C. The resulting solution was further stirred for 15 minutes, and 6.0 g of carbon black was then added thereto with stirring, followed by further stirring for 15 minutes to give a slurry. The resulting slurry was filtered through filter paper (trade name: Standard Filter Paper No.2", manufactured by Advantec Co., Ltd.), and pigment particles were then sufficiently washed with water, followed by drying with an oven of 110°C to prepare a self-dispersible pigment. The counter ion of the anionic group of the self-dispersible pigment was exchanged from a sodium ion to a potassium ion by an ion exchange process. The concentration of the pigment solid content was then adjusted to give Pigment dispersion 2. Pigment dispersion 2 contained a self-dispersible pigment having a $-C_6H_3-(COOK)_2$ group bonded to the particle surface, and the content of the pigment was 30.0%.

Pigment dispersion 3

Carbon black (500.0 g), aminophenyl(2-sulfoethyl)sulfone (APSES, 45.0 g) and distilled water (900.0 g) were put in a reactor and were stirred at 55°C and a rotation speed of 300 rpm for 20 minutes. A 25.0% aqueous sodium nitrite solution (40.0 g) was dropwise added to the mixture over 15 minutes, and distilled water (50.0 g) was then added thereto. A reaction at 60°C for 2 hours gave a reaction product. The resulting reaction product was extracted while diluting with distilled water, and the concentration of the pigment solid content was adjusted to give a dispersion having a pigment amount of 15.0%. Subsequently, impurities were removed by centrifugation to give a dispersion A. This dispersion A contained a pigment having APSES bonded to the particle surface of the pigment.

In order to determine the molar number of the functional group bonded to the pigment in the dispersion A, the following operation was performed. The concentration of sodium ion in the dispersion A was measured with a sodium ion electrode (1512A-10C, manufactured by Horiba, Ltd.) and was converted to the molar number (mol/g) per pigment solid content. Subsequently, the dispersion A having a pigment amount of 15.0% was dropwise added to a pentaethylenehexamine (PEHA) solution at room temperature over 1 hour with vigorously stirring to give a mixture. On this occasion, the concentration of PEHA in the PEHA solution was adjusted to 1- to 10-fold the molar number of the sodium ion measured above, and the volume of the solution was adjusted to the same as that of the dispersion A. This mixture was stirred for 18 to 48 hours, and impurities were then removed to give a dispersion B. The dispersion B contained a pigment having PEHA bonded to the particle surface through APSES, and the content of the pigment was 10.0%.

As a water-soluble resin, a styrene-acrylic acid copolymer (weight-average molecular weight: 8,000, acid value: 140 mgKOH/g, degree of dispersion Mw/Mn: 1.5 (Mw: weight-average molecular weight, Mn: number-average molecular weight)) was prepared. This water-soluble resin (190.0 g) was added to distilled water (1,800 g), and potassium hydroxide in an amount necessary for neutralizing the resin was added thereto and was dissolved therein by stirring to give a resin aqueous solution. The dispersion B (500.0 g) having a pigment amount of 10.0% was dropwise added to the resulting resin aqueous solution to give a mixture. The mixture was transferred to an evaporating dish and was heated at 150°C for 15 hours to evaporate the liquid components, followed by cooling of the dry matter to room temperature. The dry matter was then added to a distilled water having a pH of 9.0 adjusted with potassium hydroxide, followed by dispersion with a disperser. A 1.0 mol/L aqueous potassium hydroxide solution was further added to the dispersion with stirring, and the pH of the solution was adjusted to 10 to 11. Subsequently, impurities and coarse particles were removed by demineralization and purification to give Pigment dispersion 3. Pigment dispersion 3 contained a resin-bonded pigment having an organic group including a polymer (styrene-acrylic acid copolymer, which is a water-soluble resin) bonded to the particle surface. The amount of the pigment content was 30.0%, and the amount of the resin content was 15.0%.

Pigment dispersion 4

Ion-exchanged water (500.0 g) and carbon black (15.0 g) were stirred at 15,000 rpm for 30 minutes to preliminarily wet the pigment, and ion-exchanged water (4,485 g) was added to the mixture, followed by dispersion with a high-pressure homogenizer to give a dispersion C. The pigment in this dispersion C had an average particle diameter of 110 nm. The resulting dispersion C was transferred to a pressurized container and was pressurized at a pressure of 3.0 MPa. Ozone water having an ozone concentration of 100 ppm was then introduced into the dispersion C for ozone oxidation of the pigment to prepare a dispersion D. The pH of the dispersion D was adjusted to 10.0 with potassium hydroxide, and the concentration of the pigment solid content was then adjusted to give Pigment Dispersion 4. Pigment Dispersion 4 contained a self-dispersible pigment having a -COOK group bonded to the particle surface, and the content of the pigment was 30.0%. Pigment dispersion 5

A pigment (carbon black, 10.0 g), a water-soluble resin (20.0 g) and water (70.0 g) were mixed to prepare a mixture. The water-soluble resin used was prepared by neutralizing a styrene-acrylic acid copolymer having an acid value of 200 mgKOH/g and a weight-average molecular weight of 10,000 with a 10.0% aqueous sodium hydroxide solution. This mixture was dispersed with a sand grinder for 1 hour and was then centrifuged to remove impurities and was further pressure filtered through a microfilter (manufactured by Fujifilm Corporation) having a pore size of 3.0 $\mu$m. Subsequently, the concentration of the pigment solid content was adjusted to give Pigment dispersion 5 having a pH of 10.0. Pigment dispersion 5 contained a pigment dispersed in a water-soluble resin (resin dispersant), and the contents of the pigment and the resin were 30.0% and 15.0%, respectively.

Pigment dispersion 6

Carbon black (10.0 g), a liquid (46.6 g) containing urethane resin 1 and water (43.4 g) were mixed to prepare a mixture. This mixture was dispersed with a sand grinder for 1 hour and was then centrifuged to remove impurities and was further pressure filtered through a microfilter (manufactured by Fujifilm Corporation) having a pore size of 3.0 $\mu$m. Subsequently, the concentration of the pigment solid content was adjusted to give Pigment dispersion 6 having a pH of 10.0. Pigment dispersion 6 contained a pigment dispersed in urethane resin 1, and the contents of the pigment and the resin were 30.0% and 15.0%, respectively.

Preparation of ink

The following components:

Pigment dispersion (shown in Table 3 or 4): 10.0%,
Liquid containing urethane resin (shown in Table 3 or 4): the amount (%) shown in Table 3 or 4,
Glycerin: 9.0%,
Triethylene glycol: 5.0%,
Acetylenol E100: 0.1%, and
Ion-exchanged water: remainder

were mixed and were sufficiently stirred, followed by pressure filtration through a microfilter (manufactured by Fujifilm Corporation) having a pore size of 3.0 $\mu$m to prepare each ink. Acetylenol E100 is a nonionic surfactant (acetylene glycol ethylene oxide adduct) manufactured by Kawaken Fine Chemicals Co., Ltd. The remainder of ion-exchanged water is the amount making the total amount of all the components of the ink 100.0%.

Evaluation

Ink cartridges were filled with the respective inks prepared above and were mounted on an ink jet recording apparatus (trade name: "PIXUS iP3100", manufactured by CANON KABUSHIKI KAISHA), which ejects an ink from the recording head by means of thermal energy. In this example, the recording duty of a solid image recorded under the condition of applying one ink droplet having a mass of 28 ng $\pm$ 10% to a 1/600 inch $\times$ 1/600 inch unit region is defined as 100%. The recording conditions were a temperature of 23°C and a relative humidity of 55%. In the present invention, in the evaluation criteria of each evaluation item shown below, A and B were regarded as acceptable levels, and C was regarded as an unacceptable level. The results of the evaluations are shown in Tables 3 and 4. Tables 3 and 4 also show the characteristics of each ink.

Abrasion resistance

A recorded matter of a 1.0 inch × 0.5 inch solid image recorded with the above-mentioned ink jet recording apparatus on plain paper (trade name: "PB PAPER GF-500", manufactured by CANON KABUSHIKI KAISHA) at a recording duty of 100% was obtained. Ten minutes after the recording and one day after the recording, silbon paper and a weight having a contact pressure of 40 g/cm$^2$ were placed on the solid image as the recorded matter, and the solid image and the silbon paper were rubbed with each other. The silbon paper and the weight were then removed, and the stain state in the non-recorded area of the paper was visually checked to evaluate the abrasion resistance in accordance with the following evaluation criteria:

A: the white background had almost no stain after 10 minutes and also had no strain after one day;
B: the white background had almost no stain after 10 minutes and had almost no strain after one day; and
C: the white background had stains at an unremarkable level after 10 minutes and had almost no strain after one day.

Irregular ejection

Five 15 cm × 20 cm solid images with a recording duty of 150% were sequentially recorded on plain paper (trade name: "PB PAPER GF-500", manufactured by CANON KABUSHIKI KAISHA) with the above-mentioned ink jet recording apparatus at a default mode and a drive frequency of 10 kHz. Subsequently, a PIXUS iP3100 nozzle check pattern was recorded. The resulting nozzle check pattern was visually inspected to evaluate the irregular ejection in accordance with the following evaluation criteria:

AA: no quality deterioration was observed in the nozzle check pattern;
A: no ejection failure was observed in the nozzle check pattern, but quality deterioration was observed in one to ten nozzles;
B: no ejection failure was observed in the nozzle check pattern, but quality deterioration was observed in more than ten nozzles; and
C: ejection failure was observed in the nozzle check pattern.

Table 3: Composition and characteristic of ink and evaluation result

| | | Composition and characteristics of ink | | | | | | Results of evaluation | |
| | | Number of pigment dispersion | Liquid containing urethane resin | | Content in ink | | Mass ratio A/B | Abrasion resistance | Irregular ejection |
| | | | Number of urethane resin | Amount (%) | Pigment A (%) | Urethane resin B (%) | | | |
| Example | 1 | 1 | 1 | 35.0 | 3.0 | 15.0 | 5.0 | A | AA |
| | 2 | 2 | 1 | 35.0 | 3.0 | 15.0 | 5.0 | A | AA |
| | 3 | 3 | 1 | 35.0 | 3.0 | 15.0 | 5.0 | A | AA |
| | 4 | 4 | 1 | 35.0 | 3.0 | 15.0 | 5.0 | A | AA |
| | 5 | 5 | 1 | 35.0 | 3.0 | 15.0 | 5.0 | A | AA |
| | 6 | 6 | 1 | 35.0 | 3.0 | 15.0 | 5.0 | A | AA |
| | 7 | 2 | 2 | 35.0 | 3.0 | 15.0 | 5.0 | A | AA |
| | 8 | 2 | 3 | 35.0 | 3.0 | 15.0 | 5.0 | A | AA |
| | 9 | 2 | 4 | 35.0 | 3.0 | 15.0 | 5.0 | A | AA |
| | 10 | 2 | 5 | 35.0 | 3.0 | 15.0 | 5.0 | A | AA |
| | 11 | 2 | 6 | 35.0 | 3.0 | 15.0 | 5.0 | A | AA |
| | 12 | 2 | 7 | 35.0 | 3.0 | 15.0 | 5.0 | A | AA |
| | 13 | 2 | 8 | 35.0 | 3.0 | 15.0 | 5.0 | A | AA |
| | 14 | 2 | 9 | 35.0 | 3.0 | 15.0 | 5.0 | A | AA |
| | 15 | 2 | 10 | 35.0 | 3.0 | 15.0 | 5.0 | A | AA |
| | 16 | 2 | 11 | 35.0 | 3.0 | 15.0 | 5.0 | A | AA |
| | 17 | 2 | 12 | 35.0 | 3.0 | 15.0 | 5.0 | A | AA |
| | 18 | 2 | 13 | 35.0 | 3.0 | 15.0 | 5.0 | A | AA |
| | 19 | 2 | 14 | 35.0 | 3.0 | 15.0 | 5.0 | A | AA |
| | 20 | 2 | 15 | 35.0 | 3.0 | 15.0 | 5.0 | A | AA |
| | 21 | 2 | 16 | 35.0 | 3.0 | 15.0 | 5.0 | A | AA |
| | 22 | 2 | 17 | 35.0 | 3.0 | 15.0 | 5.0 | A | AA |
| | 23 | 2 | 18 | 35.0 | 3.0 | 15.0 | 5.0 | A | AA |
| | 24 | 2 | 19 | 35.0 | 3.0 | 15.0 | 5.0 | A | AA |
| | 25 | 2 | 20 | 35.0 | 3.0 | 15.0 | 5.0 | A | B |
| | 26 | 2 | 21 | 35.0 | 3.0 | 15.0 | 5.0 | A | A |
| | 27 | 2 | 22 | 35.0 | 3.0 | 15.0 | 5.0 | A | AA |
| | 28 | 2 | 23 | 35.0 | 3.0 | 15.0 | 5.0 | A | AA |
| | 29 | 2 | 24 | 35.0 | 3.0 | 15.0 | 5.0 | B | AA |
| | 30 | 2 | 25 | 35.0 | 3.0 | 15.0 | 5.0 | B | AA |
| | 31 | 2 | 26 | 35.0 | 3.0 | 15.0 | 5.0 | A | AA |
| | 32 | 2 | 27 | 35.0 | 3.0 | 15.0 | 5.0 | A | AA |
| | 33 | 2 | 28 | 35.0 | 3.0 | 15.0 | 5.0 | A | A |
| | 34 | 2 | 29 | 35.0 | 3.0 | 15.0 | 5.0 | A | B |
| | 35 | 2 | 30 | 35.0 | 3.0 | 15.0 | 5.0 | A | AA |
| | 36 | 2 | 31 | 35.0 | 3.0 | 15.0 | 5.0 | A | AA |
| | 37 | 2 | 32 | 35.0 | 3.0 | 15.0 | 5.0 | A | AA |
| | 38 | 2 | 33 | 35.0 | 3.0 | 15.0 | 5.0 | A | AA |
| | 39 | 2 | 34 | 35.0 | 3.0 | 15.0 | 5.0 | A | A |
| | 40 | 2 | 35 | 35.0 | 3.0 | 15.0 | 5.0 | A | B |
| | 41 | 2 | 36 | 35.0 | 3.0 | 15.0 | 5.0 | A | A |
| | 42 | 2 | 37 | 35.0 | 3.0 | 15.0 | 5.0 | A | AA |
| | 43 | 2 | 1 | 0.28 | 3.0 | 0.12 | 0.04 | B | AA |
| | 44 | 2 | 1 | 0.35 | 3.0 | 0.15 | 0.05 | A | AA |
| | 45 | 2 | 1 | 69.9 | 3.0 | 30.0 | 10.0 | A | AA |
| | 46 | 2 | 1 | 76.9 | 3.0 | 33.0 | 11.0 | A | A |
| | 47 | 2 | 38 | 0.28 | 3.0 | 0.12 | 0.04 | B | B |

Table 4: Composition and characteristic of ink and evaluation result

| | | Composition and characteristics of ink | | | | | | Results of evaluation | |
| --- | --- | --- | --- | --- | --- | --- | --- | --- | --- |
| | | Number of pigment dispersion | Liquid containing urethane resin | | Content in ink | | Mass ratio A/B | Abrasion resistance | Irregular ejection |
| | | | Number of urethane resin | Amount (%) | Pigment A (%) | Urethane resin B (%) | | | |
| Comparative Example | 1 | 2 | 39 | 35.0 | 3.0 | 15.0 | 5.0 | C | AA |
| | 2 | 2 | 40 | 35.0 | 3.0 | 15.0 | 5.0 | C | AA |
| | 3 | 2 | 41 | 35.0 | 3.0 | 15.0 | 5.0 | C | AA |
| | 4 | 2 | 42 | 35.0 | 3.0 | 15.0 | 5.0 | C | AA |
| | 5 | 2 | 43 | 35.0 | 3.0 | 15.0 | 5.0 | A | C |
| | 6 | 2 | 44 | 35.0 | 3.0 | 15.0 | 5.0 | C | AA |
| | 7 | 2 | 45 | 35.0 | 3.0 | 15.0 | 5.0 | A | C |
| | 8 | 2 | 46 | 35.0 | 3.0 | 15.0 | 5.0 | A | C |
| | 9 | 2 | 47 | 35.0 | 3.0 | 15.0 | 5.0 | A | C |
| | 10 | 2 | 48 | 35.0 | 3.0 | 15.0 | 5.0 | A | C |
| | 11 | 2 | 49 | 35.0 | 3.0 | 15.0 | 5.0 | A | C |

The present invention can provide an aqueous ink that can record images having excellent abrasion resistance and is prevented from irregular ejection and can provide an ink cartridge and an ink jet recording method using the aqueous ink.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An aqueous ink for ink jet recording contains a pigment and a urethane resin. The urethane resin includes units respectively derived from a polyisocyanate, a polyol and a tri- or more functional polyamine and has a rate (mol%) of the urea bond based on the tri- or more functional polyamine accounting for the total of the urethane bond and the urea bond in the urethane resin of 20 mol% or less and a proportion of the number of urethane bonds to the theoretical molecular weight of the molecular chain constituted of the units respectively derived from the polyisocyanate and the polyol of 40 micromoles or more to 60 micromoles or less.

**Claims**

1. An aqueous ink, for ink jet recording, comprising a pigment and a urethane resin, wherein
   the urethane resin includes units respectively derived from a polyisocyanate, a polyol and a tri- or more functional polyamine;
   a rate (mol%) of the urea bond based on the tri- or more functional polyamine accounting for the total of the urethane bond and the urea bond in the urethane resin is 20 mol% or less; and
   a proportion of the number of urethane bonds to the theoretical molecular weight of the molecular chain constituted of the units respectively derived from the polyisocyanate and the polyol is 40 micromoles or more to 60 micromoles or less.

2. The aqueous ink according to Claim 1, wherein
   the urethane resin has an acid value of 40 mgKOH/g or more to 100 mgKOH/g or less.

3. The aqueous ink according to Claim 1 or 2, wherein
   the urethane resin has a weight-average molecular weight of 4,000 or more to 25,000 or less.

**4.** The aqueous ink according to any one of Claims 1 to 3, wherein
the urethane resin has a gel fraction of 0%.

**5.** The aqueous ink according to any one of Claims 1 to 4, wherein
the acid group in the urethane resin is neutralized with an alkali metal ion and at least one ammonium type ion of an ammonium ion and an organic ammonium ion, and the total neutralization ratio of the acid group in the urethane resin is 80% or more, and the neutralization ratio by the ammonium type ion is 1% or more to less than 45%.

**6.** The aqueous ink according to any one of Claims 1 to 5, wherein
a mass ratio of the urethane resin content (mass%) to the pigment content (mass%) based on the total mass of the ink is 0.05 times or more to 10.00 times or less.

**7.** An ink cartridge comprising an ink and an ink storage portion storing the ink, wherein
the ink comprises an aqueous ink according to any one of Claims 1 to 6.

**8.** An ink jet recording method for recording an image on a recording medium by ejecting an ink from a recording head of an ink jet system, wherein
the ink comprises an aqueous ink according to any one of Claims 1 to 6.

# FIG. 1

## FIG. 2A

## FIG. 2B

Europäisches
Patentamt

European
Patent Office

Office européen
des brevets

# EUROPEAN SEARCH REPORT

Application Number

EP 17 20 6601

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 2014/378609 A1 (YAMASAKI KOUSUKE [JP] ET AL) 25 December 2014 (2014-12-25)<br>* examples 12, 13; tables 1, 2 *<br>* paragraph [0110] *<br>----- | 1,6-8<br>5<br>2-4 | INV.<br>C09D11/102<br>B41M5/00<br>C09D11/322<br>C08G18/32 |
| X<br>Y<br>A | US 2012/001980 A1 (ICHINOSE HIROFUMI [JP] ET AL) 5 January 2012 (2012-01-05)<br>* paragraph [0007] *<br>* paragraph [0106] - paragraph [0110] *<br>* examples 27/ ink 31/ PU-31; tables 2, 3 *<br>* paragraph [0121] *<br>----- | 1-3,6-8<br>5<br>4 | C08G18/34<br>C08G18/44<br>C08G18/48 |
| X<br>Y<br>A | WO 2011/074167 A1 (CANON KK [JP]; OKAMURA DAIJI [JP]; YAMASAKI KOUSUKE [JP]; ISHII MITSUR) 23 June 2011 (2011-06-23)<br>* examples 1-20; tables 2, 4, 5 *<br>* paragraphs [0007], [0065], [0099] *<br>----- | 1-3,6-8<br>5<br>4 | |
| Y | US 2002/032276 A1 (KIM SON NGUYEN [DE] ET AL) 14 March 2002 (2002-03-14)<br>* paragraph [0137] - paragraph [0138] *<br>* claims 1, 12 *<br>----- | 5 | TECHNICAL FIELDS SEARCHED (IPC)<br>C09D<br>B41M<br>C08G |

The present search report has been drawn up for all claims

| Place of search | Date of completion of the search | Examiner |
|---|---|---|
| Munich | 27 February 2018 | Inzenhofer, Kathrin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 342 830 A1

## ANNEX TO THE EUROPEAN SEARCH REPORT
## ON EUROPEAN PATENT APPLICATION NO.

EP 17 20 6601

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2018

| Patent document cited in search report | | | Publication date | Patent family member(s) | | | Publication date |
|---|---|---|---|---|---|---|---|
| US 2014378609 | A1 | | 25-12-2014 | JP | 2015025122 | A | 05-02-2015 |
| | | | | US | 2014378609 | A1 | 25-12-2014 |
| US 2012001980 | A1 | | 05-01-2012 | JP | 5730113 | B2 | 03-06-2015 |
| | | | | JP | 2012031385 | A | 16-02-2012 |
| | | | | US | 2012001980 | A1 | 05-01-2012 |
| WO 2011074167 | A1 | | 23-06-2011 | CN | 102656239 | A | 05-09-2012 |
| | | | | EP | 2480614 | A1 | 01-08-2012 |
| | | | | JP | 5804691 | B2 | 04-11-2015 |
| | | | | JP | 2011144354 | A | 28-07-2011 |
| | | | | US | 2012256984 | A1 | 11-10-2012 |
| | | | | WO | 2011074167 | A1 | 23-06-2011 |
| US 2002032276 | A1 | | 14-03-2002 | AT | 299901 | T | 15-08-2005 |
| | | | | CN | 1236783 | A | 01-12-1999 |
| | | | | DE | 19821732 | A1 | 18-11-1999 |
| | | | | DE | 59912284 | D1 | 25-08-2005 |
| | | | | EP | 0957119 | A1 | 17-11-1999 |
| | | | | ES | 2246553 | T3 | 16-02-2006 |
| | | | | JP | 4272749 | B2 | 03-06-2009 |
| | | | | JP | 2000026565 | A | 25-01-2000 |
| | | | | US | RE39936 | E | 04-12-2007 |
| | | | | US | RE41615 | E | 31-08-2010 |
| | | | | US | 6262176 | B1 | 17-07-2001 |
| | | | | US | 2002032276 | A1 | 14-03-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007522285AND PCT
- JP 2008179657 A
- JP 2011144354 A
- JP 2007522285 PCT